# EUROPEAN PATENT APPLICATION

(11) **EP 4 775 814 A2**
(43) Date of publication of application: **15.07.2026**
(21) Application number: 26151362.6
(22) Date of filing: 12.01.2026
(51) Int. Cl.: F02C 6/08, F02C 6/20, F02C 7/18, F02K 3/06

(54) **AIRCRAFT PROPULSION SYSTEM WITH INTERNAL COMPARTMENT VENTILATION**

(30) Priority: 10.01.2025 US 202519016746
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An assembly (20) is provided for an aircraft. This assembly (20) includes an engine core (50), an engine case (68), a nacelle wall (166) and an air circuit. The engine core (50) includes a compressor section (45), a combustor section (46) and a turbine section (47). The engine case (68) houses the engine core (50). The nacelle wall (166) is radially outboard of and covers the engine case (68). A compartment (140) is formed by and extends radially between the engine case (68) and the nacelle wall (166). The air circuit includes a manifold disposed within the compartment (140). The air circuit is configured to direct air from an air source into the manifold. The manifold includes a plurality of outlets. The manifold is configured to direct the air into the compartment (140) through the outlets.

## Description

### BACKGROUND OF THE DISCLOSURE

### 1. Technical Field

This disclosure relates generally to an aircraft propulsion system and, more particularly, to within an internal compartment of the aircraft propulsion system.

### 2. Background Information

An aircraft propulsion system may include one or more vented internal compartments. Various systems and methods are known in the art for venting those internal compartments. While these known venting systems and methods have various benefits, there is still room in the art for improvement.

### SUMMARY OF THE DISCLOSURE

According to an aspect of the present disclosure, an assembly is provided for an aircraft. This assembly includes an engine core, an engine case, a nacelle wall and an air circuit. The engine core includes a compressor section, a combustor section and a turbine section. The engine case houses the engine core. The nacelle wall is radially outboard of and covers the engine case. A compartment is formed by and extends radially between the engine case and the nacelle wall. The air circuit includes a manifold disposed within the compartment. The air circuit is configured to direct air from an air source into the manifold. The manifold includes a plurality of outlets. The manifold is configured to direct the air into the compartment through the outlets.

According to another aspect of the present disclosure, another assembly is provided for an aircraft. This assembly includes an engine core, an engine case, a nacelle wall and an air circuit. The engine core includes a compressor section, a combustor section and a turbine section. The engine case houses the engine core. The nacelle wall is radially outboard of and covers the engine case. A compartment is formed by and extends radially between the engine case and the nacelle wall. The air circuit includes a heat exchange leg, a bypass leg, a heat exchanger and an outlet. The air circuit is configured to direct air from an air source through the heat exchange leg and/or the bypass leg to the outlet for injection into the compartment. The heat exchange leg and the bypass leg are fluidly coupled in parallel and upstream of the outlet. The heat exchange leg extends through the heat exchanger. The bypass leg extends around the heat exchanger.

According to still another aspect of the present disclosure, another assembly is provided for an aircraft. This assembly includes an engine core, an engine case, a nacelle wall, an air circuit, an electric machine system and a fluid circuit. The engine core includes a compressor section, a combustor section and a turbine section. The engine case houses the engine core. The nacelle wall is radially outboard of and covers the engine case. A compartment is formed by and extends radially between the engine case and the nacelle wall. The air circuit includes a heat exchanger and an outlet. The air circuit is configured to direct air from an air source through the heat exchanger to the outlet for injection into the compartment. The electric machine system includes an electric machine system component. The fluid circuit is configured to cool the electric machine system component using a liquid working fluid. The heat exchanger is also fluidly coupled inline along the fluid circuit.

The outlet may be one of a plurality of outlets configured to inject the air into the compartment. The outlets may be arranged circumferentially about the engine case within the compartment.

The air circuit may also include a manifold. The outlet may be one of a plurality of outlets in the manifold. The manifold may extend circumferentially about the engine case within the compartment.

The manifold may extend at least one-hundred and eighty degrees circumferentially about the engine case within the compartment.

The manifold may circumscribe the engine case within the compartment.

The engine case may extend axially along and circumferentially around an axis. At least a first of the outlets may be configured to direct a flow of the air axially along the axis out of the air circuit and into the compartment.

The assembly may also include a heat exchanger fluidly coupled inline along the air circuit between the air source and the manifold.

The heat exchanger may be disposed radially outboard of the nacelle wall.

The assembly may also include a housing structure and a vane structure. The housing structure may include the engine case and the nacelle wall. The vane structure may project radially out from the housing structure. The heat exchanger may be configured within an interior of the vane structure.

The assembly may also include a housing structure that includes the engine case and the nacelle wall. The heat exchanger may be disposed within the housing structure.

The heat exchanger may be configured as or otherwise include a liquid-to-air heat exchanger.

The assembly may also include an electric machine system and a fluid circuit. The electric machine system may include an electric machine system component. The fluid circuit may be configured to service the electric machine system component using a liquid working fluid. The heat exchanger may also be fluidly coupled inline along the fluid circuit.

The air circuit may include a heat exchange leg and a bypass leg fluidly coupled in parallel and upstream of the manifold along the air circuit. The heat exchange leg may extend through the heat exchanger. The bypass leg may extend around the heat exchanger.

The air circuit may also include a flow regulator configured to selectively regulate flow of the air within the air circuit into the heat exchange leg and/or the bypass leg.

The air circuit may also include a flow regulator. The flow regulator may include a first manifold outlet and a second manifold outlet. The first manifold outlet may be fluidly coupled with and upstream of the heat exchange leg. The second manifold outlet may be fluidly coupled with and upstream of the bypass leg.

The air circuit may also include a flow regulator with a manifold outlet. The manifold outlet may be fluidly coupled with and upstream of the heat exchange leg and the bypass leg.

The air circuit may also include an electric compressor fluidly coupled to and upstream of the manifold.

The nacelle wall may at least partially form a radial inner peripheral boundary of a bypass flowpath around the engine core. The nacelle wall may be radially between the compartment and the bypass flowpath.

The air source may be or otherwise include the bypass flowpath.

The nacelle wall may at least partially form an exterior surface which borders an environment external to the aircraft.

The assembly may also include one or more engine accessories disposed within the compartment. The air circuit may be configured to ventilate an internal environment within the compartment surrounding the one or more engine accessories.

The assembly may also include one or more electric devices disposed within the compartment. The air circuit may be configured to ventilate an internal environment within the compartment surrounding the one or more electric devices.

The assembly may also include a propulsor rotor. The engine core may be configured to drive rotation of the propulsor rotor about an axis.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system at an electric machine system.
FIG. 3 is a schematic illustration of a portion of the aircraft propulsion system at a working fluid system with multiple fluid circuits.
FIGS. 4A and 4B are end view illustrations of various ventilation manifold arrangements within an internal compartment of the aircraft propulsion system.
FIG. 5 is a schematic sectional illustration of a portion of the ventilation manifold within the internal compartment of the aircraft propulsion system.
FIGS. 6A and 6B are schematic sectional illustrations of a portion of the aircraft propulsion system with various air circuit inlet arrangements along a vane structure.
FIG. 7 is a schematic sectional illustration of a portion of the aircraft propulsion system with its air circuit inlet along an inner housing structure.
FIG. 8 is a schematic illustration of a portion of an air circuit with an electric compressor.
FIGS. 9A and 9B are schematic illustrations of a portion of the air circuit with various parallel circuit leg arrangements.
FIG. 10 is a partial side schematic illustration of the aircraft propulsion system with an open propulsor rotor.

### DETAILED DESCRIPTION

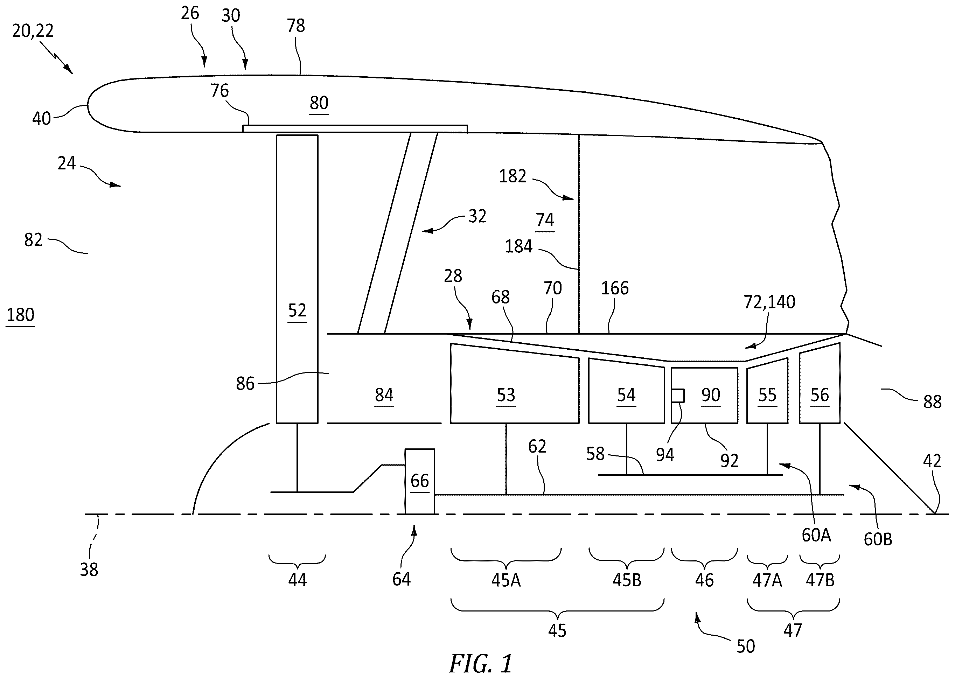

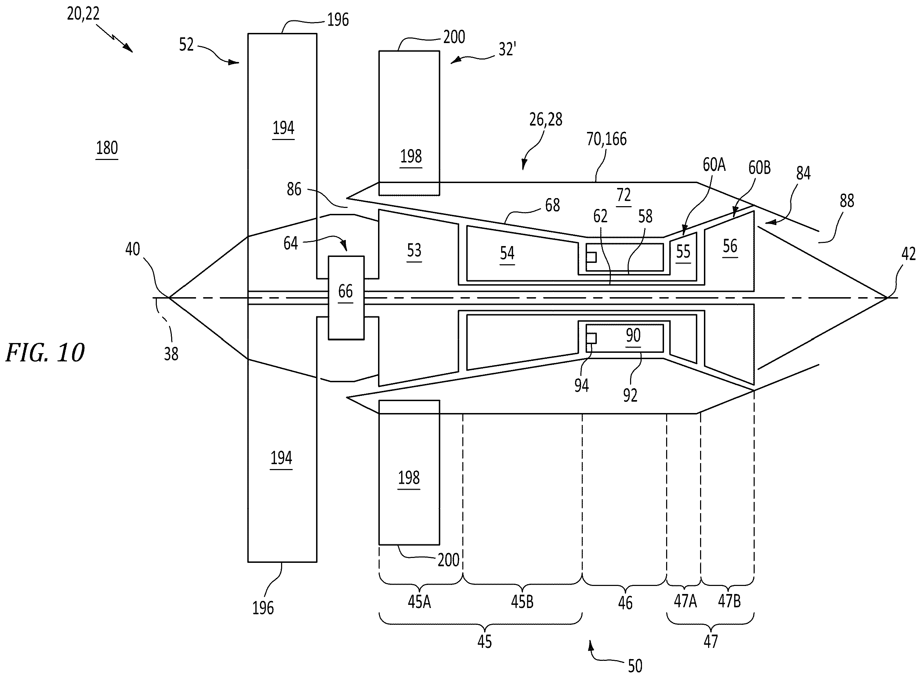

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted or open rotor propulsion system (see FIG. 10). Moreover, the aircraft powerplant 20 is not limited to propulsion system applications. The aircraft powerplant 20, for example, may alternatively (or also) be configured as an electrical power system for the aircraft; e.g., an auxiliary power unit (APU).

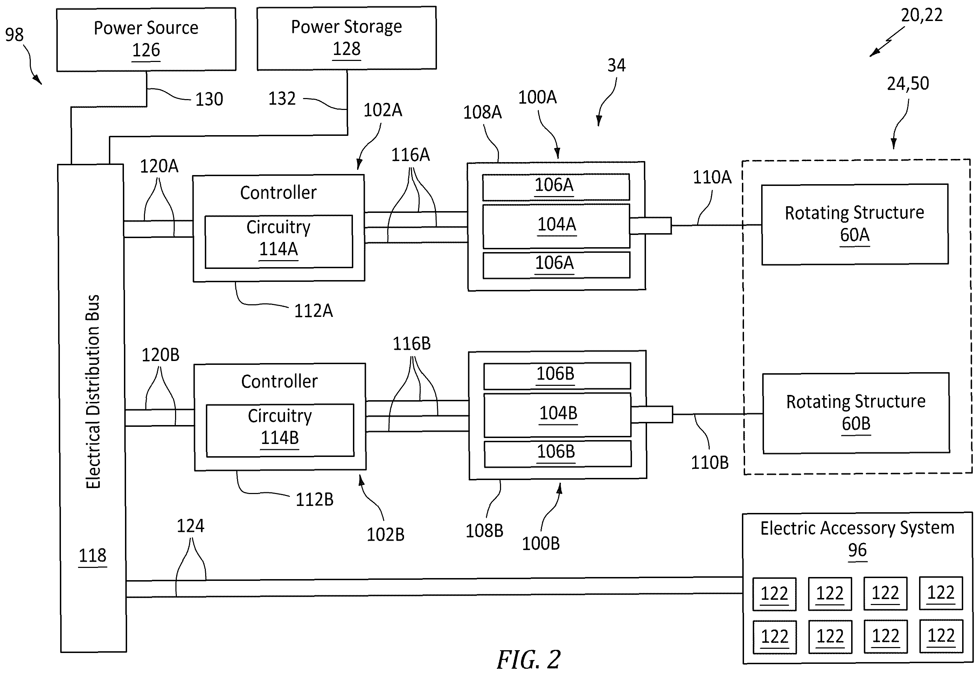

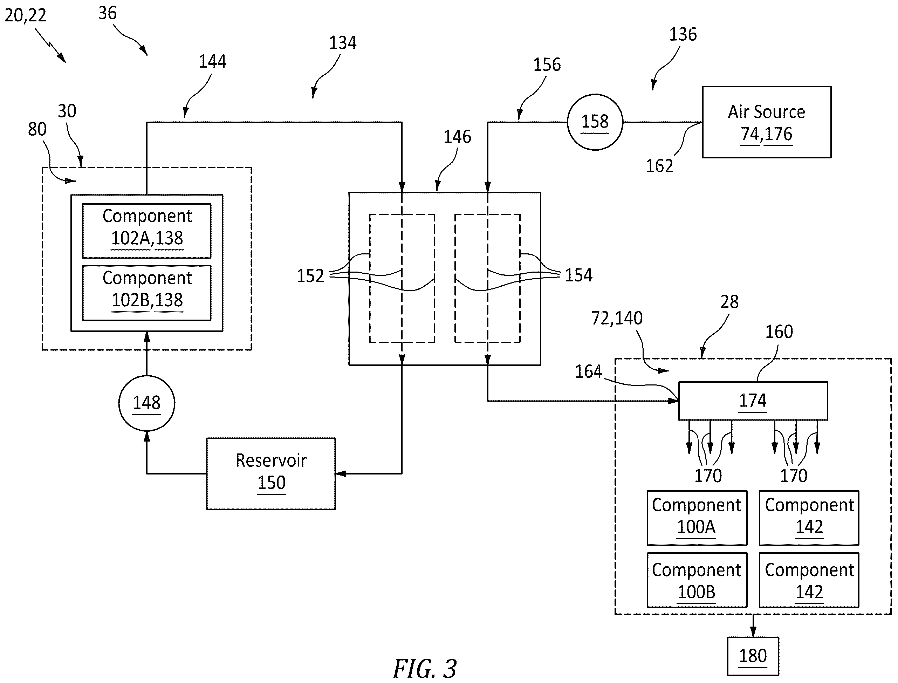

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and a working fluid system 36 (see FIG. 3). The aircraft propulsion system 22 extends axially along an axis 38 between an axial forward, upstream end 40 of the aircraft propulsion system 22 and an axial aft, downstream end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. Here, at least (or only) the LPC section 45A, the HPC section 45B, the combustor section 46, the HPT section 47A and the LPT section 47B collectively form a core 50 of the turbine engine 24.

The engine sections 44-47B may be arranged sequentially along the propulsion system axis 38 within the propulsion system housing 26. The propulsor section 44 includes a bladed propulsor rotor 52; e.g., a fan rotor. The LPC section 45A includes a bladed low pressure compressor (LPC) rotor 53. The HPC section 45B includes a bladed high pressure compressor (HPC) rotor 54. The HPT section 47A includes a bladed high pressure turbine (HPT) rotor 55. The LPT section 47B includes a bladed low pressure turbine (LPT) rotor 56.

The HPC rotor 54 is coupled to and rotatable with the HPT rotor 55. The HPC rotor 54 of FIG. 1, for example, is connected to the HPT rotor 55 through a high speed shaft 58. At least (or only) the HPC rotor 54, the HPT rotor 55 and the high speed shaft 58 collectively form a high speed rotating structure 60A; e.g., a high speed spool of the engine core 50. This high speed rotating structure 60A of FIG. 1 and its members 54, 55 and 58 are rotatable about the propulsion system axis 38. However, it is contemplated the high speed rotating structure 60A may alternatively be rotatable about another axis radially and/or angularly offset from the rotational axis of the propulsor rotor 52 and/or the centerline axis of the turbine engine 24.

The LPC rotor 53 is coupled to and rotatable with the LPT rotor 56. The LPC rotor 53 of FIG. 1, for example, is connected to the LPT rotor 56 through a low speed shaft 62. At least (or only) the LPC rotor 53, the LPT rotor 56 and the low speed shaft 62 collectively form a low speed rotating structure 60B; e.g., a low speed spool of the engine core 50. This low speed rotating structure 60B is further coupled to the propulsor rotor 52 through a drivetrain 64. The drivetrain 64 may be configured as a geared drivetrain, where a geartrain 66 (e.g., a transmission, a speed change device, an epicyclic geartrain, etc.) is disposed between and operatively couples the propulsor rotor 52 to the low speed rotating structure 60B and its LPT rotor 56. With this arrangement, the propulsor rotor 52 may rotate at a different (e.g., slower) rotational speed than the low speed rotating structure 60B and its LPT rotor 56. Alternatively, the drivetrain 64 may be configured as a direct drive drivetrain, where the geartrain 66 is omitted. With such an arrangement, the propulsor rotor 52 rotates at a common (the same) rotational speed as the low speed rotating structure 60B and its LPT rotor 56. The low speed rotating structure 60B of FIG. 1 and its members 53, 56 and 62 as well as the propulsor rotor 52 are rotatable about the propulsion system axis 38. However, it is contemplated the low speed rotating structure 60B may alternatively be rotatable about another axis radially and/or angularly offset from the rotational axis of the propulsor rotor 52 and/or the centerline axis of the turbine engine 24.

The inner housing structure 28 of FIG. 1 includes an inner case 68 (e.g., a core case) for the turbine engine 24, an inner nacelle structure 70 (sometimes referred to as an inner fixed structure (IFS)) and an internal inner housing compartment 72 (e.g., an engine core compartment). The inner case 68 is disposed radially outboard of, extends axially along and may circumscribe one or more or all of the engine sections 45A-47B and the engine rotors 53-56. The inner case 68 may thereby house and provide a support structure for the respective engine sections 45A-47B and the engine rotors 53-56. The inner nacelle structure 70 is configured to provide an aerodynamic cover over the engine core 50 and its inner case 68. The inner housing compartment 72 of FIG. 1 is formed by and is disposed radially between the inner case 68 and an inner barrel of the inner nacelle structure 70. The inner housing structure 28 and its inner nacelle structure 70 may also form a radial inner peripheral boundary of a (e.g., annular) bypass flowpath 74 within the aircraft propulsion system 22.

The outer housing structure 30 of FIG. 1 includes an outer case 76 (e.g., a fan case) for the turbine engine 24, an outer nacelle structure 78 and an internal outer housing compartment 80. The outer case 76 is disposed radially outboard of, extends axially along and may circumscribe the propulsor section 44 and its propulsor rotor 52. The outer case 76 may thereby house and provide a containment structure for the propulsor section 44 and its propulsor rotor 52. The outer nacelle structure 78 is configured to provide an aerodynamic cover over the outer case 76. The outer housing compartment 80 of FIG. 1 is at least partially formed by and disposed radially between the outer case 76 and an outer portion (e.g., fan cowls) of the outer nacelle structure 78. The outer housing structure 30 and its outer nacelle structure 78 may also form a radial outer peripheral boundary of the bypass flowpath 74.

During operation, ambient air from outside of the aircraft enters the aircraft propulsion system 22 and its turbine engine 24 through an airflow inlet 82. This air is directed across the propulsor section 44 and into a (e.g., annular) core flowpath 84 and the bypass flowpath 74. The core flowpath 84 of FIG. 1 extends sequentially through the LPC section 45A, the HPC section 45B, the combustor section 46, the HPT section 47A and the LPT section 47B from an airflow inlet 86 into the core flowpath 84 to a combustion products exhaust 88 out from the core flowpath 84 and the engine core 50. The air entering the core flowpath 84 may be referred to as "core air". The bypass flowpath 74 extends through a bypass duct, which bypass flowpath 74 and bypass duct bypass (e.g., are disposed radially outboard of and extend along) the engine core 50 and the inner housing structure 28. The air within the bypass flowpath 74 may be referred to as "bypass air".

The core air is compressed by the LPC rotor 53 and the HPC rotor 54 and is directed into a combustion chamber 90 (e.g., annular combustion chamber) of a combustor 92 (e.g., annular combustor) in the combustor section 46. Fuel is injected into the combustion chamber 90 by one or more fuel injectors 94 and mixed with the compressed core air to provide a fuel-air mixture. This fuel-air mixture is ignited and combustion products thereof flow through and sequentially drive rotation of the HPT rotor 55 and the LPT rotor 56 about the propulsion system axis 38. The rotation of the HPT rotor 55 and the LPT rotor 56 respectively drive rotation of the HPC rotor 54 and the LPC rotor 53 about the propulsion system axis 38 and, thus, compression of the air received from the core inlet 86. The rotation of the LPT rotor 56 also drives rotation of the propulsor rotor 52 about the propulsion system axis 38 through the drivetrain 64 and its geartrain 66. The rotation of the propulsor rotor 52 propels the bypass air through and out of the bypass flowpath 74. The propulsion of the bypass air may account for a majority of thrust generated by the turbine engine 24 of FIG. 1. Briefly, within the bypass flowpath 74, the guide vane structure 32 conditions (e.g., straightens out, de-swirls, etc.) the flow of bypass air propelled by the propulsor rotor 52 to enhance the forward thrust.

While the turbine engine 24 is described above with a particular two rotating structure arrangement, the present disclosure is not limited thereto. For example, the LPC rotor 53 may be omitted to configure the LPT rotor 56 as a power turbine (PT) rotor for the propulsor rotor 52. In another example, the turbine engine 24 may also include another rotating structure; e.g., an intermediate speed spool for the engine core 50.

Referring to FIG. 2, the electric machine system 34 is electrically coupled to an optional electric accessory system 96 and an electrical system 98 for the aircraft and its aircraft propulsion system 22. The electric machine system 34 of FIG. 2 includes one or more electric machines 100A and 100B (generally referred to as "100") and one or more electric machine (EM) controllers 102A and 102B (generally referred to as "102"). For ease of description, each electric machine 100 of FIG. 2 is described below as being electrically coupled to, controlled by and/or otherwise associated with a single, dedicated one of the EM controllers 102. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 100A, 100B of FIG. 2 includes an electric machine rotor 104A, 104B (generally referred to as "104"), an electric machine stator 106A, 106B (generally referred to as "106") and an electric machine housing 108A, 108B (generally referred to as "108"); e.g., a case. The machine rotor 104 is rotatable about a rotational axis of the machine rotor 104, which rotational axis may also be an axial centerline of the electric machine 100. The machine stator 106 of FIG. 2 is radially outboard of and circumscribes the machine rotor 104. With this arrangement, each electric machine 100 is configured as a radial flux electric machine. The electric machines 100 of the present disclosure, however, are not limited to such an exemplary rotor-stator configuration nor to radial flux arrangements. The machine rotor 104, for example, may alternatively be radially outboard of and circumscribe the machine stator 106. In another example, the machine rotor 104 may be axially next to the machine stator 106 configuring the respective electric machine 100 as an axial flux electric machine. Referring again to FIG. 2, the machine rotor 104 and the machine stator 106 are at least partially or completely housed within an interior of the machine housing 108.

Each electric machine 100A, 100B may be operatively coupled to a respective one of the engine rotating structures 60A, 60B (generally referred to as "60"). Each machine rotor 104A, 104B of FIG. 2, for example, is mechanically coupled to and rotatable with the respective engine rotating structure 60A, 60B through a drivetrain 110A, 110B (generally referred to as "110"). This drivetrain 110 may be configured as or otherwise include a shaft, a tower shaft assembly, an accessory gearbox, an angle gearbox, and/or the like. For ease of description, each machine rotor 104 of FIG. 2 is described below as being coupled to and rotatable with a unique one of the engine rotating structures 60 of the turbine engine 24. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system. In addition, while the electric machines 100 are described above as being coupled to the engine rotating structures 60, it is contemplated the machine rotor 104 of one or more of the electric machines 100 may alternatively be operatively coupled to another rotating device through the drivetrain 110 such as, but not limited to, a pump rotor, an auxiliary compressor rotor, an actuator rotor, or the like.

Each electric machine 100 of FIG. 2 may be configurable as an electric motor and/or an electric generator; e.g., an electric motor-generator. For example, during a motor mode of operation, a respective one of the electric machines 100 may operate as the electric motor to convert electricity received from the aircraft electrical system 98 into mechanical power. The machine stator 106, for example, may generate an electromagnetic field with the machine rotor 104 using a current of electricity received from the aircraft electrical system 98 through the respective EM controller 102. This electromagnetic field may drive rotation of the machine rotor 104. The machine rotor 104, in turn, may provide mechanical power to and drive rotation of the respective engine rotating structure 60 through the respective drivetrain 110. This mechanical power may be provided to boost power or completely power the rotation of the respective engine rotating structure 60. By contrast, during a generator mode of operation, the respective electric machine 100 may operate as the electric generator to convert mechanical power received from the respective engine rotating structure 60 into electricity. Rotation of the machine rotor 104, for example, may be rotationally driven by rotation of the respective engine rotating structure 60 through the respective drivetrain 110. The rotation of the machine rotor 104 may generate an electromagnetic field with the machine stator 106, and the machine stator 106 may convert energy from the electromagnetic field into electricity. The respective electric machine 100 may then provide a current of electricity to the aircraft electrical system 98 through the respective EM controller 102 for storage and/or further use. The electric machines 100 of the present disclosure, however, are not limited to such exemplary operation. For example, one, some or all of the electric machines 100 may alternatively each be configured as a dedicated electric generator; e.g., without the electric motor functionality. In another example, one, some or all of the electric machines 100 may alternatively each be configured as a dedicated electric motor; e.g., without the electric generator functionality.

Each EM controller 102A, 102B includes a controller housing 112A, 112B (generally referred to as "112") and internal controller circuitry 114A, 114B (generally referred to as "114"). The controller housing 112 may be configured as an enclosed case (e.g., a closed or sealed container) for the respective controller circuitry 114. The controller circuitry 114 is disposed within an interior of the controller housing 112; e.g., an internal chamber or other volume(s) within and enclosed by the controller housing 112. The controller circuitry 114 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 102A, 102B is electrically coupled to a respective one of the electric machines 100A, 100B through one or more electric cables 116A, 116B (generally referred to as "116"); e.g., high voltage electric cables, power feeder cables, etc. More particularly, the controller circuitry 114 of each EM controller 102 is electrically coupled to the respective electric machine 100 and its machine stator 106 through the respective electric cables 116. Similarly, each EM controller 102A, 102B is electrically coupled to an electrical distribution bus 118 of the aircraft electrical system 98 through one or more electric cables 120A, 120B (generally referred to as "120"); e.g., high voltage electric cables, power feeder cables, etc. More particularly, the controller circuitry 114 of each EM controller 102 is electrically coupled to the aircraft electrical system 98 and its electrical distribution bus 118 through the respective electric cables 120.

Each EM controller 102 and its controller circuitry 114 are configured to control operation of a respective one of the electric machines 100. For example, when operating as the electric motor, the respective EM controller 102 and its controller circuitry 114 are configured to regulate a flow of electricity from the aircraft electrical system 98 to the respective electric machine 100. This electricity flow regulation may include: (a) turning-on the flow of electricity from the aircraft electrical system 98 to the respective electric machine 100 (e.g., electrically coupling the respective electric machine 100 to the aircraft electrical system 98); (b) turning-off the flow of electricity from the aircraft electrical system 98 to the respective electric machine 100 (e.g., electrically decoupling the respective electric machine 100 from the aircraft electrical system 98); (c) moderating the flow of electricity from the aircraft electrical system 98 to the respective electric machine 100. Here, the respective EM controller 102 operates as a motor controller. In another example, when operating as the electric generator, the respective EM controller 102 and its controller circuitry 114 are configured to regulate a flow of electricity from the respective electric machine 100 to the aircraft electrical system 98. This electricity flow regulation may include: (a) turning-on the flow of electricity from the respective electric machine 100 to the aircraft electrical system 98 (e.g., electrically coupling the respective electric machine 100 to the aircraft electrical system 98); (b) turning-off the flow of electricity from the respective electric machine 100 to the aircraft electrical system 98 (e.g., electrically decoupling the respective electric machine 100 from the aircraft electrical system 98); (c) moderating the flow of electricity from the respective electric machine 100 to the aircraft electrical system 98. Here, the respective EM controller 102 operates as a generator controller.

The electric accessory system 96 includes one or more electric devices 122. The electric devices 122 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 122 of FIG. 2 may be configured as part of one or more sub-systems for the aircraft propulsion system 22 and its turbine engine 24. Examples of these sub-systems include, but are not limited to: a fuel system for delivering the fuel to the fuel injectors (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 122 is electrically coupled to the electrical distribution bus 118 of the aircraft electrical system 98 through one or more electric cables 124 (collectively schematically shown); e.g., high voltage electric cables, low voltage electric cables, power feeder cables, etc. Each electric device 122 may thereby receive a current of electricity from the aircraft electrical system 98 to power operation thereof.

The aircraft electrical system 98 includes the electrical distribution bus 118. This aircraft electrical system 98 may also include a power source 126 and/or a power storage 128. The electrical distribution bus 118 is electrically coupled to each of the electric machines 100 through their respective EM controllers 102. The electrical distribution bus 118 is electrically coupled to each of the electric devices 122. The electrical distribution bus 118 is also electrically coupled to the power source 126 and the power storage 128, schematically shown via 130 and 132 respectively. With this arrangement, the electrical distribution bus 118 provides an intermediate connection between the various electrical aircraft propulsion system members 100A (via 102A), 100B (via 102B), 122, 126 and/or 128. The power source 126 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 128 is configured to receive electricity from the electrical distribution bus 118 for storage. The power storage 128 is also configured to provide the stored electricity to the electrical distribution bus 118. The power storage 128, for example, may be configured as or otherwise include one or more electricity storage devices; e.g., batteries, super capacitors, etc. With the foregoing aircraft electrical system arrangement, the electrical current provided to one, some or all of the electric devices 122 may be received, through the electrical distribution bus 118, from any one, some or all of the electrical aircraft propulsion system members 100A, 100B, 126 and/or 128. It is also contemplated the electrical current provided to one of the electric machines 100 may be received from another one of the electric machines 100 through the aircraft electrical system 98 and its electrical distribution bus 118.

Referring to FIG. 3, the working fluid system 36 may be configured as a heat exchange, lubrication and/or ventilation system for the aircraft propulsion system 22. The working fluid system 36 of FIG. 3, for example, includes a plurality of discrete fluid circuits 134 and 136; e.g., fluidly decoupled circuits. Each of these fluid circuits 134, 136 may be configured to cool, lubricate, ventilate and/or otherwise service one or more propulsion system components and/or propulsion system locations. For example, the electric machine (EM) system circuit 134 of FIG. 3 is configured to cool and/or lubricate at least (or only) one or more components 138 of the electric machine system 34 (see FIG. 2). For ease of description, the one or more serviced electric machine (EM) system components 138 are described below as being one or more of the EM controllers 102. However, it is contemplated the one or more EM system components 138 may also include or alternatively be configured as one or more of the electric machines 100 (see FIG. 2). The air circuit 136 of FIG. 3 is configured to ventilate (e.g., supply air to, purge air from, circulate air through, etc.) at least (or only) an internal compartment 140 within the aircraft propulsion system 22 such as, but not limited to, the inner housing compartment 72. This air circuit 136 may also be configured to facilitate convective cooling of one or more components of the aircraft propulsion system 22 located within the internal compartment 140. For ease of description, the one or more propulsion system components are described below as including one or more of the electric machines 100 and/or one or more engine accessories 142. Examples of the engine accessories 142 include, but are not limited to, pump(s), electric generator(s), electric motor(s), actuator(s), controller(s), accessory gearbox(es), or various other peripherally mounted engine components. However, it is contemplated the one or more engine components may also include or alternatively be configured as one or more of the EM controllers 102 (see FIG. 2).

The EM system circuit 134 of FIG. 3 includes an electric machine system (EMS) circuit path 144, a heat exchanger (HX) 146, a working fluid pump 148 and a working fluid reservoir 150. Within this EM system circuit 134, the circuit components 146, 150 and 148 are arranged inline along the EMS circuit path 144. The EMS circuit path 144 of FIG. 3, for example, extends serially through the circuit components 146, 150 and 148 in a closed loop. The EMS circuit path 144 of FIG. 3 is also (a) fluidly coupled to and may extend in series or in parallel through and/or (b) may be otherwise arranged in thermal communication with the respective EM system components 138 (e.g., the EM controllers 102) serviced by the EM system circuit 134. Note, while the EM system components 138 are shown as being upstream of the heat exchanger 146 along the EMS circuit path 144, it is contemplated one or more or all of these EM system components 138 may alternatively be arranged downstream of the heat exchanger 146 along the EMS circuit path 144. In addition or alternatively, while the reservoir 150 is shown as being downstream of the heat exchanger 146 along the EMS circuit path 144, it is contemplated the reservoir 150 may alternatively be upstream of the heat exchanger 146 along the EMS circuit path 144. Moreover, it is contemplated the EM system circuit 134 may (or may not) include various additional components (not shown) arranged along the EMS circuit path 144 such as filter(s), sensor(s), additional heat exchanger(s), additional component(s), valve(s), pump(s), etc. The present disclosure therefore is not limited to the exemplary EM system circuit arrangement shown in FIG. 3.

The heat exchanger 146 may be shared by the EM system circuit 134 and the air circuit 136. The heat exchanger 146 of FIG. 3, for example, includes one or more internal electric machine system (EMS) circuit passages 152 and one or more internal air circuit passages 154. Each of these circuit passages 152, 154 may be partially or completely formed by the heat exchanger 146. Each of the circuit passages 152, 154 also extends within and/or through the heat exchanger 146. The EMS circuit passages 152 may form a section of or may otherwise be fluidly coupled inline with the EMS circuit path 144. The air circuit passages 154 may form a section of or may otherwise be fluidly coupled inline with an air circuit path 156 of the air circuit 136. The EMS circuit passages 152 are thereby fluidly discrete from the air circuit passages 154 within the heat exchanger 146. Within the heat exchanger 146, the EMS circuit passages 152 and the air circuit passages 154 may be arranged to configure the heat exchanger 146 as a crossflow heat exchanger, a counterflow heat exchanger, a parallel flow heat exchanger, or a hybrid heat exchanger with a combination crossflow, counterflow and/or parallel flow arrangement.

The pump 148 is configured to direct and/or regulate a flow of a liquid working fluid (e.g., lubricant and/or a heat exchange fluid) through the EMS circuit path 144 from an outlet from (e.g., a supply of) the reservoir 150, through the EM system components 138 and the heat exchanger 146, to an inlet into (e.g., a return of) the reservoir 150.

The reservoir 150 is configured to contain a quantity of the working fluid before, during and/or after EM system circuit operation. The reservoir 150, for example, may be configured as or otherwise include a tank, a cylinder, a pressure vessel, a bladder or any other type of (e.g., liquid) storage container.

During operation of the EM system circuit 134 of FIG. 3, the pump 148 directs (e.g., pumps) relatively cooling working fluid out of the reservoir 150, through the EMS circuit path 144, into the EM system components 138 and/or into one or more heat exchangers (e.g., cooling plates) in thermal communication with the EM system components 138. As the working fluid flows through the EM system components 138 and/or the heat exchangers in thermal communication with the EM system components 138, heat energy generated by the EM system components 138 may be transferred into the working fluid. The heat energy transfer may thereby dissipate the heat energy in (e.g., cool) the EM system components 138 while also heating the working fluid. The working fluid may also lubricate one or more internal components within the EM system components 138 (when applicable). The now heated working fluid is directed away from the EM system components 138, through the EMS circuit path 144, to the heat exchanger 146. Within the heat exchanger 146, at least some or all of the heat energy previously transferred into the working fluid from the EM system components 138 may be transferred out of the working fluid into air flowing through the air circuit 136 and its air circuit passages 154. The now cooled working fluid is directed from the heat exchanger 146, through the EMS circuit path 144, back into the reservoir 150 of subsequent recirculation.

The air circuit 136 of FIG. 3 includes the air circuit path 156, a flow regulator 158, the heat exchanger 146 and a ventilation manifold 160. Within this air circuit 136, the circuit components 158, 146 and 160 are arranged inline along the air circuit path 156. The air circuit path 156 of FIG. 3, for example, extends serially through the circuit components 158 and 146 from an inlet 162 into the air circuit 136 and its air circuit path 156 to an inlet 164 into the ventilation manifold 160. It is contemplated the air circuit path 156 may (or may not) also extend through and/or otherwise be fluidly coupled to various additional components (not shown) such as filter(s), sensor(s), additional heat exchanger(s), additional component(s), valve(s), pump(s), etc. The present disclosure therefore is not limited to the exemplary air circuit arrangement shown in FIG. 3.

The flow regulator 158 is configured to regulate a flow of the air through the air circuit path 156 from the air circuit inlet 162 to the heat exchanger 146 and the downstream ventilation manifold 160. The flow regulator 158, for example, may be configured as a valve. With such a configuration, during one mode of operation, the flow regulator 158 may close to completely stop (or reduce to a minimum level) the flow of the air through the air circuit path 156 to the downstream air circuit members 146 and 160. During another mode of operation, the flow regulator 158 may completely open to facilitate a full (e.g., unimpeded) flow of the air through the air circuit path 156 to the downstream air circuit members 146 and 160. During still another mode of operation, the flow regulator 158 may partially open (or close) to meter a partial flow of the air through the air circuit path 156 to the downstream air circuit members 146 and 160.

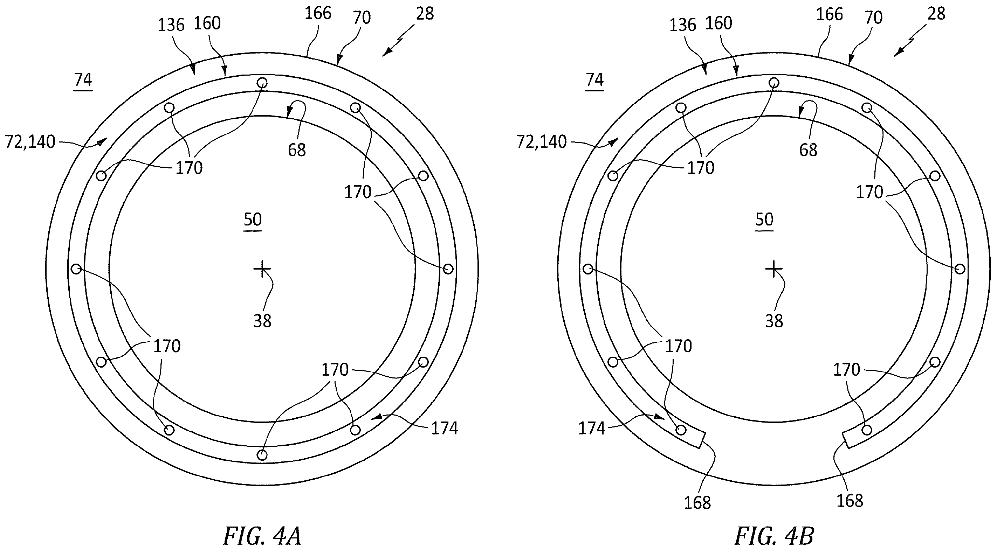

Referring to FIGS. 4A and 4B, the ventilation manifold 160 is disposed within the internal compartment 140 radially between the inner case 68 and a nacelle wall 166 of the inner nacelle structure 70. More particularly, the ventilation manifold 160 is disposed radially outboard of the engine core 50 and its inner case 68. The ventilation manifold 160 may (or may not) also be spaced radially outboard from the inner case 68 by an inner air gap; e.g., an annular air gap. The ventilation manifold 160 is disposed radially inboard of the inner nacelle structure 70 and its nacelle wall 166. The ventilation manifold 160 may (or may not) also be spaced radially inboard from the inner nacelle structure 70 and its nacelle wall 166. Briefly, the nacelle wall 166 forms a portion (e.g., a barrel section) of the inner nacelle structure 70 radially between the internal compartment 140 and another volume outside of the inner housing structure 70. The nacelle wall 166 of FIG. 1, for example, is radially between and partially forms the inner housing compartment 72 and the bypass flowpath 74.

Referring again to FIGS. 4A and 4B, the ventilation manifold 160 may extend at least one-hundred and eighty degrees (180°), two-hundred and seventy degrees (270°) or more circumferentially about the propulsion system axis 38. For example, referring to FIG. 4A, the ventilation manifold 160 may extend completely circumferentially around the propulsion system axis 38. The ventilation manifold 160 of FIG. 4A thereby has a full-hoop (e.g., annular) body which circumscribes the engine core 50 and its inner case 68. In another example, referring to FIG. 4B, the ventilation manifold 160 may extend partially circumferentially around the propulsion system axis 38 between opposing circumferential ends 168 of the ventilation manifold 160. The ventilation manifold 160 of FIG. 4B thereby has an arcuate or substantially annular body extending about the engine core 50 and its inner case 68.

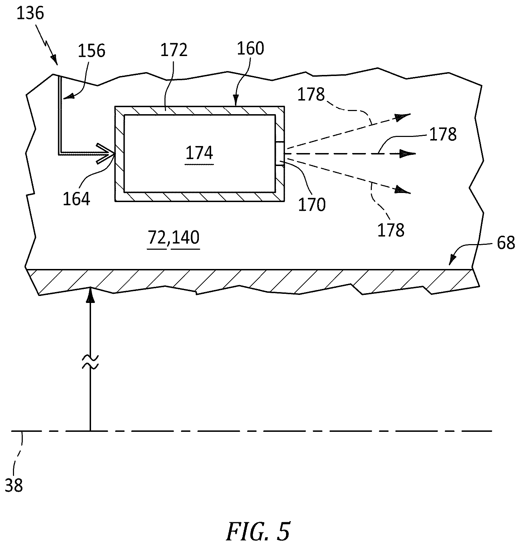

The ventilation manifold 160 is configured with one or more manifold outlets 170. The manifold outlets 170 are arranged and may (or may not) be equispaced circumferentially about the engine core 50 and its inner case 68 in an array. In FIG. 4A, the array of manifold outlets may be a circular array. In FIG. 4B, the array of manifold outlets may be an arcuate or substantially annular array. Referring to FIG. 5, each manifold outlet 170 extends axially through a sidewall 172 of the ventilation manifold 160 from an interior cavity 174 of the ventilation manifold 160 to the internal compartment 140. Each manifold outlet 170 thereby fluidly couples the interior cavity 174 of the ventilation manifold 160 to the internal compartment 140.

During operation of the air circuit 136 of FIG. 3, the air circuit inlet 162 receives a flow of the air from an air source 176 such as the bypass flowpath 74. The air circuit inlet 162, for example, may bleed a quantity of the bypass air out of the bypass flowpath 74 and direct that bled air into the air circuit path 156. Within the air circuit 136, the air flows through the flow regulator 158 and into the heat exchanger 146 where the heat energy is transferred from the liquid working fluid of the EM system circuit 134 into the air as described above. The (e.g., now slightly heated) air subsequently flows into the interior cavity 174 of the ventilation manifold 160 before being injected into the internal compartment 140 through the manifold outlets 170. More particularly, referring to FIG. 5, each manifold outlet 170 may direct a flow of the air (e.g., an air jet) axially out of the ventilation manifold 160 and into the internal compartment 140 along, for example, a substantially axial trajectory 178. This trajectory 178 may be parallel with the propulsion system axis 38. Alternatively, the trajectory 178 may be (e.g., slightly) angularly canted radially inwards towards the inner case 68 or radially outward away from the inner case 68. By injecting the air into the internal compartment 140, the air circuit 136 of FIG. 3 provides ventilation air for the internal compartment 140. This ventilation air may further convectively cool various other components within the internal compartment 140 as that air flows though the internal compartment 140 before being exhausted from the internal compartment 140 into an environment 180 external to the aircraft and its aircraft propulsion system 22 (see FIG. 1), or alternatively into another region of the aircraft propulsion system 22 for further use.

While the air may be heated by the heat exchanger 146 prior to injection into the internal compartment 140, the air circuit 136 and its heat exchanger 146 may be configured such that the increase in temperature of the air remains low enough to provide adequate ventilation and/or convective cooling. Moreover, one or more or all of the EM system components 138 serviced by the EM system circuit 134 may be positioned remote from the relatively hot engine core 50 (see FIG. 1) to reduce cooling requirements for those EM system components 138. For example, the EM system components 138 of FIG. 3 may be disposed within the outer housing compartment 80, or alternatively another region of the aircraft propulsion system 22 or a component of an aircraft airframe that is remote from the relatively hot engine core 50 (see FIG. 1). The present disclosure, however, is not limited to such exemplary arrangements. For example, in other embodiments, it is contemplated one or more of the EM system components 138 may alternatively be arranged with the inner housing structure 28 (see FIG. 1); e.g., within the inner housing compartment 72.

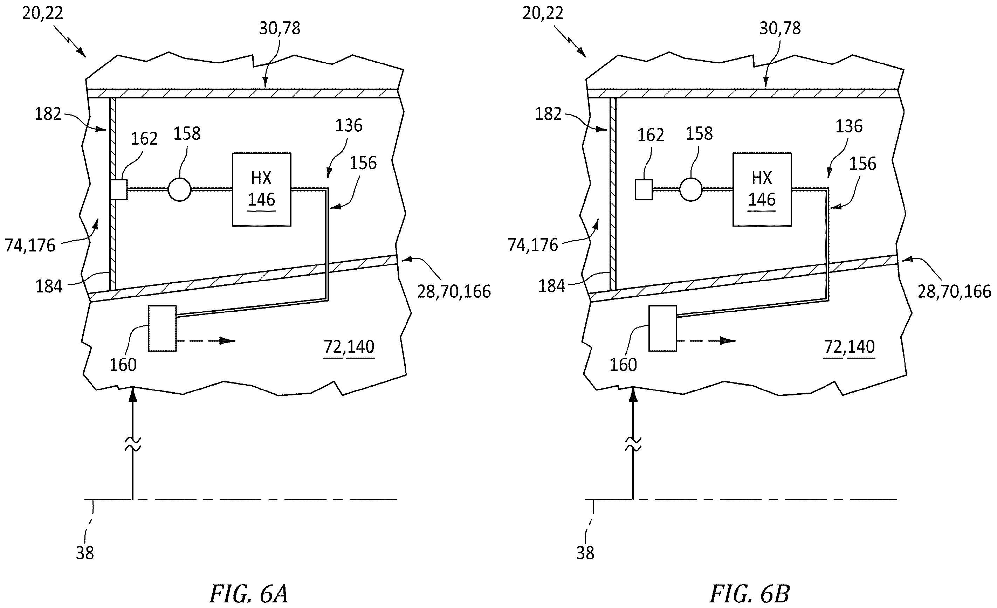

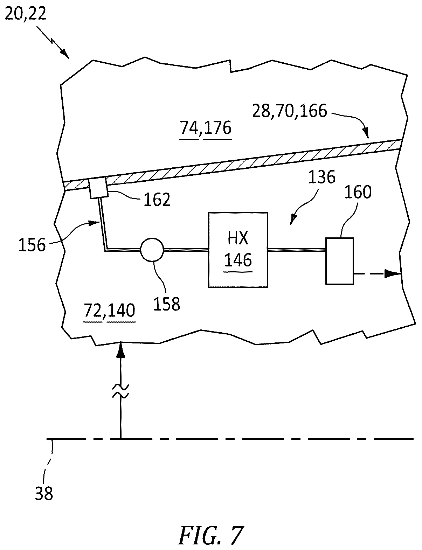

Referring to FIGS. 6A and 6B, the air circuit inlet 162 may be configured with a vane structure 182 such as a bifurcation (see also FIG. 1). This vane structure 182 of FIGS. 6A and 6B, for example, is connected to the inner housing structure 28 and the outer housing structure 30. The vane structure 182 thereby projects radially across and may circumferentially bifurcate a section of the bypass flowpath 74. In some embodiments, referring to FIG. 6A, the air circuit inlet 162 may be arranged at a leading edge 184 of the vane structure 182. In other embodiments, referring to FIG. 6B, the air circuit inlet 162 may be arranged along a side of the vane structure 182 downstream of the leading edge 184. Alternatively, referring to FIG. 7, the air circuit inlet 162 may be configured with the inner housing structure 28 along the inner peripheral boundary of the bypass flowpath 74.

In some embodiments, referring to FIGS. 6A and 6B, the heat exchanger 146 may be arranged remote from the inner housing structure 28 and its inner housing compartment 72. The heat exchanger 146 of FIGS. 6A and 6B, for example, is disposed radially outboard of the inner nacelle structure 70 and its nacelle wall 166. More particularly, the heat exchanger 146 of FIGS. 6A and 6B is disposed within an interior of the vane structure 182. In other embodiments, referring to FIG. 7, the heat exchanger 146 may be arranged within the inner housing structure 28. The heat exchanger 146 of FIG. 7, for example, is disposed within the inner housing compartment 72 radially between the inner case 68 and the inner nacelle structure 70 and its nacelle wall 166.

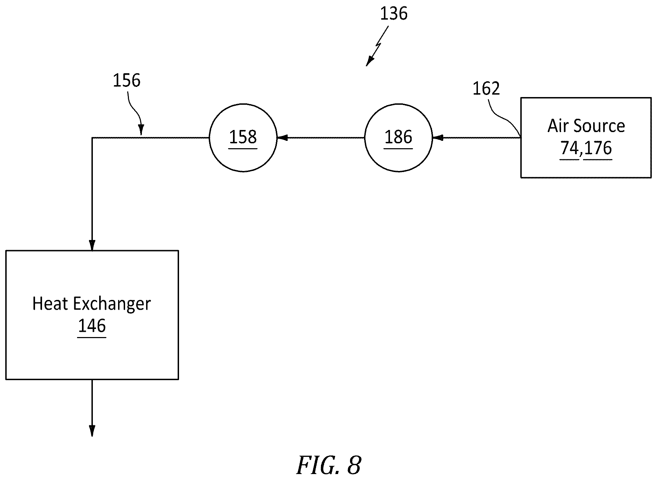

In some embodiments, referring to FIG. 8, the air circuit 136 may also include an electric compressor 186; e.g., a boost compressor. This electric compressor 186 may be arranged inline along the air circuit 136 between the air circuit inlet 162 and the heat exchanger 146. In some embodiments, the electric compressor 186 may be provided in addition to the flow regulator 158. In other embodiments, the electric compressor 186 may be provided as a replacement for the flow regulator 158 where, for example, the electric compressor 186 is used as a flow regulator. With this arrangement, the electric compressor 186 may boost a pressure of the incoming air directed into the air circuit 136 from the air circuit inlet 162 as needed. This may be particularly useful where the aircraft propulsion system 22 is configured as an open rotor aircraft propulsion system as described below in further detail.

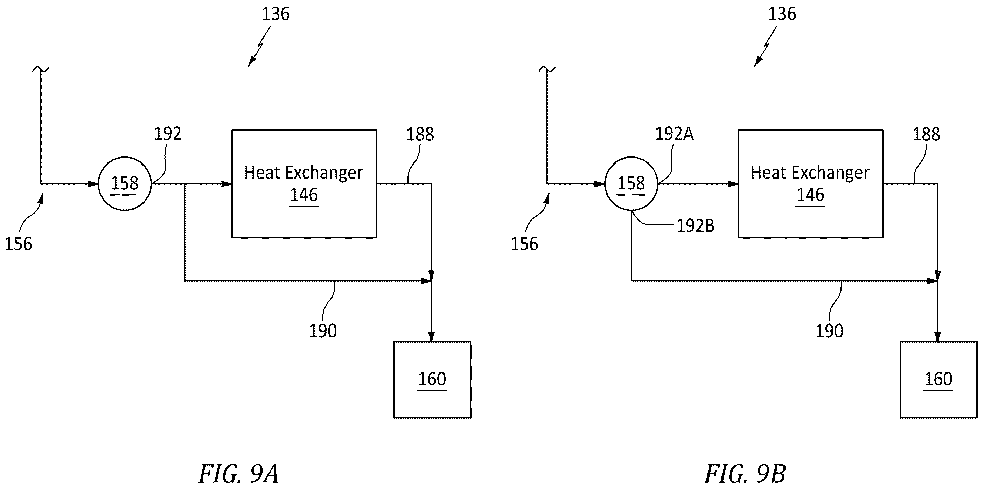

In some embodiments, referring to FIGS. 9A and 9B, the air circuit 136 and its air circuit path 156 may include a set of parallel circuit legs 188 and 190. The heat exchange leg 188 extends through the heat exchanger 146 and includes the air circuit passages 154 (see FIG. 3). The bypass leg 190 extends around the heat exchanger 146. These circuit legs 188 and 190 are fluidly coupled in parallel between the flow regulator 158 and the ventilation manifold 160. In some embodiments, referring to FIG. 9A, an inlet into the heat exchange leg 188 and an inlet into the bypass leg 190 may be fluidly coupled to a common outlet 192 from the flow regulator 158. With such an arrangement, air flows through both circuit legs 188 and 190 whenever the air passes through the flow regulator 158 and out of the common outlet 192. Thus, the air received by the ventilation manifold 160 may include a mixture of (e.g., slightly) heated air from the heat exchanger 146 and relatively cool air that bypassed the heat exchanger 146. In other embodiments, referring to FIG. 9B, the inlet into the heat exchange leg 188 and the inlet into the bypass leg 190 may be respectively fluidly coupled to discrete outlets 192A and 192B from the flow regulator 158, where the flow regulator 158 here may be a multi-way (e.g., 3-way) valve or valve system, a flow diverter, etc. With such an arrangement, the flow regulator 158 may selectively direct the air within the air circuit 136 to the heat exchange leg 188, to the bypass leg 190 or to both circuit legs 188 and/or 190. For example, when cooling requirements for the EM system components 138 of FIG. 3 are relatively high, the flow regulator 158 of FIG. 9B may direct some, more or all of the air into the heat exchange leg 188. By contrast, when the cooling requirements for the EM system components 138 of FIG. 3 are relatively low or the EM system components 138 are non-operational, the flow regulator 158 of FIG. 9B may direct some, more or all of the air into the bypass leg 190. Of course, it is contemplated the flow regulator 158 may still alternatively direct substantially uniform flows of the air into both circuit legs 188 and 190.

The heat exchanger 146 is described above as a shared heat exchanger between the EM system circuit 134 and the air circuit 136 of FIG. 3. The present disclosure, however, is not limited to such an exemplary configuration. The air circuit 136, for example, may alternatively share its heat exchanger 146 with another fluid circuit for the aircraft propulsion system 22. Moreover, while the heat exchanger 146 is described above and a liquid-to-air heat exchanger, it is contemplated the heat exchanger 146 may alternatively be configured as an air-to-air heat exchanger.

The aircraft propulsion system 22 of FIG. 1 is described above as a ducted propulsor propulsion system; e.g., the turbofan propulsion system. However, as described above, the present disclosure is not limited to such an exemplary aircraft propulsion system. For example, referring to FIG. 10, the outer housing structure 30 (see FIG. 1) may be omitted from the propulsion system housing 26 to open the propulsor rotor 52 up to the external environment 180. More particularly, the propulsor rotor 52 of FIG. 10 includes a plurality of open propulsor blades 194 arranged circumferentially about the propulsion system axis 38 in an array (e.g., a circular array), which array of propulsor blades may be unshrouded or alternatively shrouded by a tubular propulsor rotor shroud dedicated to the propulsor rotor 52 for example. Each of these propulsor blades 194 projects radially out from a base of the propulsor rotor 52, into the external environment 180, to a distal tip 196 of the respective propulsor blade 194. Each propulsor blade 194 is thereby configured as an un-ducted propulsor blade which is exposed to (e.g., disposed in) the surrounding external environment 180. With this arrangement, the propulsor rotor 52 is an open propulsor rotor (e.g., an un-ducted propulsor rotor) and the aircraft propulsion system 22 is configured as an open rotor propulsion system. Moreover, the inner housing structure 28 and its members 70 and 166 may form an exterior of the aircraft propulsion system 22 and may border the external environment 180.

The aircraft propulsion system 22 of FIG. 10 is configured with an open guide vane structure 32'. This guide vane structure 32' of FIG. 10 includes a plurality of open exit guide vanes 198; e.g., airfoils. The guide vanes 198 are arranged and may (or may not) be equispaced circumferentially about the propulsion system axis 38 in an array (e.g., a circular array), which array of guide vanes may be unshrouded or alternatively shrouded by a tubular guide vane shroud dedicated to the guide vane structure 32' for example. This guide vane structure 32' and its guide vanes 198 are arranged axially next to (e.g., adjacent) the propulsor rotor 52 and its propulsor blades 194. The guide vane structure 32' and its guide vanes 198 of FIG. 10, for example, are arranged downstream of the propulsor rotor 52 and its propulsor blades 194, without (e.g., any) other elements axially therebetween to obstruct, turn and/or otherwise influence the air propelled by the propulsor rotor 52 to the guide vane structure 32' for example. Each of the guide vanes 198 projects radially out from an exterior surface of the inner housing structure 28, into the external environment 180, to a distal tip 200 of the respective guide vane 198. Each guide vane 198 is thereby configured as an un-ducted guide vane which is exposed to (e.g., disposed in) the surrounding external environment 180. With the foregoing arrangement, the guide vane structure 32' and its guide vanes 198 are configured to condition (e.g., straighten out, de-swirl, etc.) an outer stream of air propelled by the propulsor rotor 52 within the external environment 180 that bypass the engine core 50. Of course, in other embodiments, the guide vane structure 32' may be omitted where, for example, the aircraft propulsion system 22 is alternatively configured as a counter-rotating open rotor (CROR) aircraft propulsion system, etc.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly (20) for an aircraft, comprising:
an engine core (50) including a compressor section (45), a combustor section (46) and a turbine section (47);
an engine case (68) housing the engine core (50);
a nacelle wall (166) radially outboard of and covering the engine case (68), wherein a compartment (140) is formed by and extends radially between the engine case (68) and the nacelle wall (166); and
an air circuit (136) comprising a manifold (160) disposed within the compartment (140), the air circuit (136) configured to direct air from an air source into the manifold (160), the manifold (160) comprising a plurality of outlets (170), and the manifold (160) configured to direct the air into the compartment (140) through the plurality of outlets (170).

2. The assembly of claim 1, wherein the manifold (160) extends at least one-hundred and eighty degrees circumferentially about the engine case (68) within the compartment (140).

3. The assembly of claim 1 or 2, wherein
the engine case (68) extends axially along and circumferentially around an axis (38); and
at least a first of the plurality of outlets (170) is configured to direct a flow of the air axially along the axis (38) out of the air circuit (136) and into the compartment (140).

4. The assembly of any preceding claim, further comprising a heat exchanger (146) fluidly coupled inline along the air circuit (136) between the air source and the manifold (160), optionally wherein the heat exchanger (146) comprises a liquid-to-air heat exchanger (146).

5. The assembly of claim 4, wherein the heat exchanger (146) is disposed radially outboard of the nacelle wall (166).

6. The assembly of claim 4 or 5, further comprising:
a housing structure (28) including the engine case (68) and the nacelle wall (166); and
a vane structure (32; 182) projecting radially out from the housing structure (28);
the heat exchanger (146) configured within an interior of the vane structure (32).

7. The assembly of claim 4, further comprising:
a housing structure (28) including the engine case (68) and the nacelle wall (166);
the heat exchanger (146) disposed within the housing structure (28).

8. The assembly of any of claims 4 to 7, further comprising:
an electric machine system (34) comprising an electric machine system component (138); and
a fluid circuit (134) configured to service the electric machine system component (138) using a liquid working fluid, the heat exchanger (146) further fluidly coupled inline along the fluid circuit (134).

9. The assembly of any of claims 4 to 8, wherein
the air circuit (136) includes a heat exchange leg (188) and a bypass leg (190) fluidly coupled in parallel and upstream of the manifold (160) along the air circuit (136);
the heat exchange leg (188) extends through the heat exchanger (146); and
the bypass leg (190) extends around the heat exchanger (146),
optionally wherein the air circuit (136) further comprises a flow regulator (158) configured to selectively regulate flow of the air within the air circuit (136) into at least one of the heat exchange leg (188) or the bypass leg (190).

10. The assembly of any preceding claim, wherein the air circuit (136) further comprises an electric compressor (186) fluidly coupled to and upstream of the manifold (160).

11. The assembly of any preceding claim, wherein the nacelle wall (166) at least partially forms a radial inner peripheral boundary of a bypass flowpath (74) around the engine core (50), and the nacelle wall (166) is radially between the compartment (140) and the bypass flowpath (74), optionally wherein the air source comprises the bypass flowpath (74).

12. The assembly of any of claims 1 to 10, wherein the nacelle wall (166) at least partially forms an exterior surface which borders an environment (180) external to the aircraft.

13. The assembly of any preceding claim, further comprising:
one or more engine accessories (142) disposed within the compartment (140), wherein the air circuit (136) is configured to ventilate an internal environment within the compartment (140) surrounding the one or more engine accessories (142); and/or
one or more electric devices (122) disposed within the compartment (140), wherein the air circuit (136) is configured to ventilate an internal environment within the compartment (140) surrounding the one or more electric devices (122).

14. An assembly (20) for an aircraft, comprising:
an engine core (50) including a compressor section (45), a combustor section (46) and a turbine section (47);
an engine case (68) housing the engine core (50);
a nacelle wall (166) radially outboard of and covering the engine case (68), wherein a compartment (140) is formed by and extends radially between the engine case (68) and the nacelle wall (166); and
an air circuit (136) including a heat exchange leg (188), a bypass leg (190), a heat exchanger (146) and an outlet (170), the air circuit (136) configured to direct air from an air source through at least one of the heat exchange leg (188) or the bypass leg (190) to the outlet (170) for injection into the compartment (140);
the heat exchange leg (188) and the bypass leg (190) fluidly coupled in parallel and upstream of the outlet (170), the heat exchange leg (188) extending through the heat exchanger (146), and the bypass leg (190) extending around the heat exchanger (146), optionally wherein:
the air circuit (136) further includes a manifold (160);
the outlet (170) is one of a plurality of outlets (170) in the manifold (160); and
the manifold (160) extends circumferentially about the engine case (68) within the compartment (140).

15. An assembly (20) for an aircraft, comprising:
an engine core (50) including a compressor section (45), a combustor section (46) and a turbine section (47);
an engine case (68) housing the engine core (50);
a nacelle wall (166) radially outboard of and covering the engine case (68), wherein a compartment (140) is formed by and extends radially between the engine case (68) and the nacelle wall (166); and
an air circuit (136) including a heat exchanger (146) and an outlet (170), the air circuit (136) configured to direct air from an air source through the heat exchanger (146) to the outlet (170) for injection into the compartment (140);
an electric machine system (34) comprising an electric machine system component (138); and
a fluid circuit (134) configured to cool the electric machine system component (138) using a liquid working fluid, the heat exchanger (146) further fluidly coupled inline along the fluid circuit (134).
